# EUROPÄISCHE PATENTSCHRIFT

(11) **EP 1 960 242 B1**
(45) Veröffentlichungstag und Bekanntmachung des Hinweises auf die Patenterteilung: **03.06.2015**
(21) Anmeldenummer: 06829661.5
(22) Anmeldetag: 15.12.2006
(51) Int. Cl.: B60T 8/17, B60T 10/04, B60K 17/356

(54) **VERFAHREN UND VORRICHTUNG ZUM HYDROSTATISCHEN BREMSEN EINES FAHRZEUGS**
METHOD AND DEVICE FOR THE HYDROSTATIC BRAKING OF A VEHICLE
PROCEDE ET DISPOSITIF DE FREINAGE HYDROSTATIQUE DE VEHICULE

(30) Priorität: 16.12.2005 DE 102005060340
(43) Veröffentlichungstag der Anmeldung: 27.08.2008
(73) Patentinhaber: Bosch Rexroth AG, 70184 Stuttgart (DE)
(72) Erfinder: BEHM, Martin, 89073 Ulm (DE)
(74) Vertreter: Körfer, Thomas
(86) Internationale Anmeldenummer: PCT/EP2006/012125
(87) Internationale Veröffentlichungsnummer: WO 2007/073891

(56) Entgegenhaltungen:
- EP-A1- 0 653 324
- EP-A1- 1 431 098
- EP-A2- 0 599 263
- DE-A1- 19 638 421

## Beschreibung

Die Erfindung betrifft eine Vorrichtung und ein Verfahren zum kontrollierten Bremsen eines Fahrzeugs mit hydrostatischem Fahrantrieb.

Aus der DE 196 38 421 A1 ist ein Traktionssteuersystem bekannt, dessen Verwendung für eine Steuerung eines hydraulisch angetriebenen Fahrzeugs mit einer vorderen und hinteren Antriebseinheit vorgesehen ist. Dieses Traktionssteuersystem weist pro Antriebseinheit einen an diese angeschlossenen Hydraulikmotor mit veränderlicher Verdrängung auf, wobei die Hydraulikmotoren parallel zu einer Pumpe angeschlossen sind. In dem Traktionssteuersystem ist ein zentrales Steuersystem vorgesehen, das Parameter wie Geschwindigkeit, Bewegungsrichtung und Neigung der Bodenfläche erfasst und so weiterverarbeitet, dass damit die Hydraulikmotoren der vorderen und hinteren Antriebseinheit so angesteuert werden, dass bei einem Auftreten von Schlupf an einer Achse der Hydromotor der betreffenden Achse entsprechend verstellt wird.

Das Dokument EP 0 653 324 A1 beschreibt ein Verfahren zum hydrostatischen Antrieb wobei das Verzögern durch stufenweises Herunterschalten geschieht. Das Dokument EP 0 599 263 A2 zeigt ein hydrostatisch-mechanisches Laistungs-Verzweigungsgetriebe für Kraftfahrzeuge mit mehrerern Schaltbereichen.

Nachteil des in der DE 196 38 421 A1 beschriebenen Traktionssteuersystem besteht darin, dass trotz einer Änderung des Durchflusses durch einen Hydraulikmotor die Fördermenge der Pumpe konstant bleibt. Somit kann eine Verminderung des Durchflusses durch den Hydraulikmotor einen Druckanstieg in den Leitungen des Hydraulikkreis bewirken, wobei diese Leitungen und insbesondere ihre Anschlüsse übermäßig beansprucht werden. Eine Erhöhung des Durchflusses hingegen zieht einen Druckabfall in den Leitungen des Hydraulikkreises nach sich, wobei ebenfalls mechanische Schädigungen in den Leitungen aufgrund eventuell auftretender Kavitation zu befürchten sind. Außerdem findet keine Berücksichtigung des dynamischen Bremsverhaltens statt.

Die vorliegende Erfindung hat die Aufgabe, ein verbessertes Verfahren und eine verbesserte Vorrichtung zum Bremsen eines Fahrzeugs zu schaffen, das auch die Dynamik des Bremsablaufs berücksichtigt.

Die Aufgabe wird bezüglich des Verfahrens erfindungsgemäß durch die Merkmale des Anspruchs 1 und bezüglich der Vorrichtung durch die Merkmale des Anspruchs 13 gelöst. Die in den Unteransprüchen ausgeführten Maßnahmen betreffen vorteilhafte Weiterbildungen der Erfindung.

Das erfindungsgemäße Verfahren und die erfindungsgemäße Vorrichtung zum kontrollierten Bremsen eines Fahrzeugs mit hydrostatischen Fahrantrieb gehen davon aus, dass der hydrostatische Fahrantriebe zumindest zwei verschwenkbare, mit je einer Achse des Fahrantriebs verbundene, von einer Hydropumpe angetriebene Hydromotoren aufweist, die von jeweils einem Regelkreis geregelt werden. Eine Regelung der Hydromotoren dient dazu, blockierende Räder am Fahrzeug zu verhindern, indem die Regelung für jede Achse oder für jedes Rad des Fahrantriebs kontinuierlich jeweils eine Führungsgröße aus Sollwert-Istwert Differenz einer Drehzahl des angetriebenen Rads bestimmt und diese Führungsgröße jeweils in den Regelkreis rückgekoppelt wird. Zum Bereitstellen einer verzögerungsabhängigen Bremskraftverteilung auf die jeweilige Achse durch ein Steuerprogramm wird eine Verlagerung der Achslast des Fahrzeugs aus der momentanen Verzögerung des Fahrzeugs dynamisch bestimmt und eine resultierende Bremskraft auf die von dem Hydromotor angetriebene Achse ermittelt. Über den der jeweiligen Achse zugeordneten Hydromotor wird die resultierende Bremskraft durch Einstellen eines Schwenkwinkels des entsprechenden Hydromotors bzw. der entsprechenden Hydromotoren umgesetzt.

Vorzugsweise wird die momentane Verzögerung bei einer Betätigung der Bremsen während des gesamten Bremsvorgangs durch Differenzieren einer momentanen Lineargeschwindigkeit des Fahrzeugs relativ zum Untergrund bestimmt.

Erfindungsgemäss wird durch Multiplikation der momentanen Verzögerung mit einem Geometriefaktor, der sich aus dem Verhältnis der Höhe des Fahrzeugschwerpunkts zu dem Abstand der Achsen berechnet, die Verlagerung der Achslast dynamisch während des gesamten Bremsvorgangs bestimmt wird. Das erfindungsgemäße Verfahren wird nach einer Anpassung des Geometriefaktors für verschiedene Fahrzeugtypen verwendet .

Ein weiterer Vorteil des erfindungsgemäßen Verfahrens bzw. der erfindungsgemäßen Vorrichtung besteht darin, dass die resultierende Bremskraft auf die vordere Achse und die resultierende Bremskraft auf die hintere Achse sich um den doppelten Betrag der Verlagerung der Achslast unterscheiden. Die resultierende Bremskraft auf die in Fahrtrichtung vordere Achse ergibt sich durch eine Addition einer vorgegebenen Bremskraft zu der Verlagerung der Achslast, wohingegen sich die resultierende Bremskraft auf die hintere Achse durch eine Subtraktion der Verlagerung der Achslast von der vorgegebenen Bremskraft ergibt. Dabei wird vorteilhafterweise der Schwenkwinkel des Hydromotors an der vorderen Achse so vergrößert, dass eine um die Verlagerung der Achslast erhöhte Bremskraft auf die Unterlage ausgeübt wird. Der Schwenkwinkel des Hydromotors an der hinteren Achse wird so verkleinert, dass die Räder der hinteren Achse eine verringerte Bremskraft auf die Unterlage übertragen. Vorteilhafterweise beugt die verzögerungsabhängige Bremskraftverteilung einem Blockieren der Räder an der Hinterachse und damit einem Ausbrechen des Fahrzeugs beim Bremsen vor. Dadurch kann ohne zusätzlichen Aufwand an Komponenten ein verbessertes Bremsverhalten realisiert werden.

Ferner ist von Vorteil, dass die die Hydromotoren antreibende Hydropumpe selbst in einen Regelkreis integriert ist. Dadurch kann das Fördervolumen der Hydropumpe dynamisch an den Durchfluss der verstellbaren Hydromotoren angepasst werden.

Weiterhin ist von Vorteil, dass das erfindungsgemäße Verfahren bzw. die erfindungsgemäße Vorrichtung sowohl pro Fahrzeugachse als auch pro Rad angewendet werden kann.

Eine bevorzugte Ausführungsform der erfindungsgemäßen Vorrichtung zum kontrollierten Bremsen eines hydrostatischen Fahrantriebs ist in der Zeichnung dargestellt und wird in der nachfolgenden Beschreibung näher erläutert. Es zeigen:
- Fig. 1: eine schematische Darstellung der erfindungsgemäßen Vorrichtung;
- Fig. 2: eine schematische Darstellung des Regelkreises der erfindungsgemäßen Vorrichtung;
- Fig. 3: eine schematische Darstellung der zusätzlich zur vorgegebenen Bremskraft wirkenden Verlagerung der Achslast und
- Fig. 4: eine schematische Darstellung des Algorithmus zur Berechnung einer verzögerungsabhängigen Bremskraftverteilung.

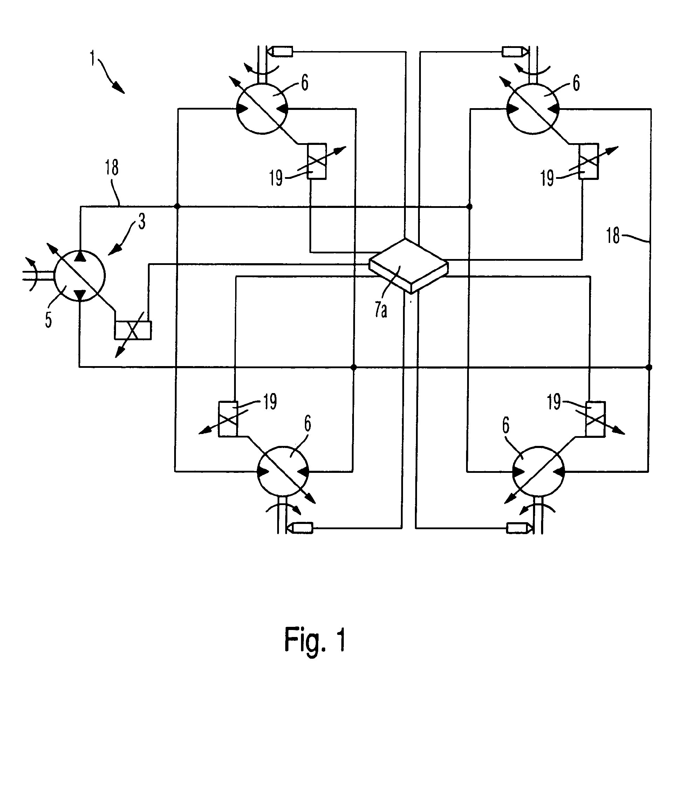

Fig. 1 zeigt eine schematische Darstellung der erfindungsgemäßen Vorrichtung 1 zum kontrollierten Bremsen eines Fahrzeugs 2 mit hydrostatischen Fahrantrieb 3, der einen geschlossenen Hydraulikkreis 18 aufweist. In dieser Darstellung weist der hydrostatische Fahrantrieb 3 vier verschwenkbare von einer Hydropumpe 5 angetriebene Hydromotoren 6 auf, wobei jeweils zwei Hydromotoren 6 mit je einer Achse 4 des Fahrantriebs 3 verbunden sind, bzw. jeder Hydromotor 6 ein Fahrzeugrad antreibt.

Die erfindungsgemäße Vorrichtung 1 weist eine Regeleinrichtung 7a zur kontinuierlichen Rückkopplung einer Führungsgröße F aus Sollwert-Istwert Differenz einer Drehzahl des angetriebenen Rads 17 in die Regeleinrichtung 7a auf. Dazu ist an den Rädern des hydrostatischen Fahrantriebs 3 jeweils ein Drehzahlsensor angebracht, der die momentane Drehzahl des Rads 17 erfasst und zur weiteren Auswertung an die Regeleinrichtung 7a übermittelt.

Die Regeleinrichtung 7a bewirkt ein Antiblockiersystem zum Bereitstellen einer Bremskraftverteilung F_{Br,v}, F_{Br,h} auf die Achsen 4 des Fahrantriebs 3, indem die Räder 17, die sich relativ zu den übrigen Rädern des Fahrantriebs 3 mit einer geringeren Geschwindigkeit drehen, erfasst werden und entsprechend einer dynamisch aus der Führungsgröße F ermittelten Regelgröße R dadurch abgebremst werden, dass der Durchfluss des entsprechenden Hydromotors 6 entsprechend verringert wird.

In einem Steuerprogramm der Regeleinrichtung 7a ist eine dynamische Bestimmung der Verlagerung der Achslast ΔF des Fahrzeugs 2 aus der momentanen Verzögerung a des Fahrzeugs 2 vorgesehen, wobei eine resultierende Bremskraft F_{IBR,v}, F_{Br,h} auf die von dem Hydromotor 6 angetriebene Achse 4a, 4b ermittelt wird und über den der jeweiligen Achse 4a, 4b zugeordneten, auf Null schwenkbaren Hydromotor 6 durch Einstellen eines Schwenkwinkels umgesetzt wird.

Die Hydromotoren 6 und die Hydropumpe 5 der erfindungsgemäßen Vorrichtung 1 weisen jeweils ein elektroproportional angesteuertes Stellglied 19 auf, das die von der Regeleinrichtung 7a bestimmte Regelgröße empfängt und an den Hydromotor 6 bzw. die Hydropumpe 5 weitergibt, so dass sich daraus die neuen Betriebsparameter wie Durchfluss und Schwenkwinkel einstellen. In einem weiteren Ausführungsbeispiel kann das Stellglied 19 auch so angeordnet sein, dass sein Signal simultan auf zwei Hydromotoren 6 an einer Achse 4 wirkt. Dadurch weisen jeweils zwei Hydromotoren 6 auf einer Antriebsachse 4a, 4b ein gemeinsames elektroproportional angesteuertes Stellglied 19 auf.

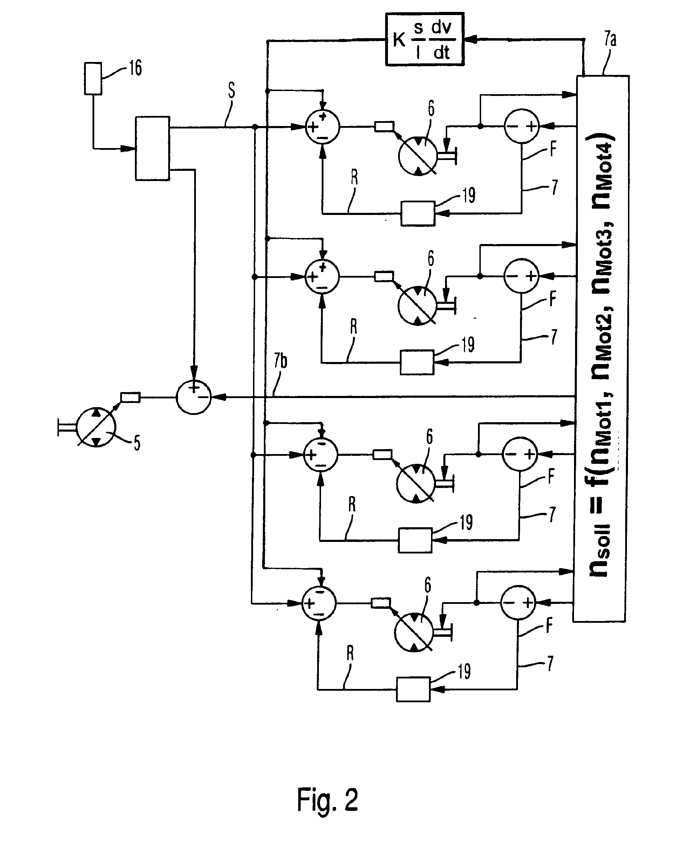

Fig. 2 zeigt eine schematische Darstellung des Regelkreises 7 der erfindungsgemäßen Vorrichtung 1. Mittels eines Steuergeräts 16 wird die Hydropumpe 5 so weit ausgeschwenkt, dass das Hydraulikfluid im Hydraulikkreislauf 18 strömt und die vier Hydromotoren 6 antreibt. Das Steuergerät 16 gibt zusätzlich noch den Schwenkwinkel der Hydromotoren 6 vor, so dass gewährleistet ist, dass der Schwenkwinkel der Hydromotoren 6 ausreichend dafür ist, dass genügend Hydraulikfluid durch die Hydromotoren 6 strömt und diese eine für den Fahrantrieb notwendige Bremskraft auf eine Unterlage 20 übertragen.

An die Hydromotoren 6 und die Hydropumpe 5 ist eine Regeleinrichtung 7a angeschlossen, die aus einer momentanen Differenz einer dynamisch bestimmten IstDrehzahl und einer in der Regeleinrichtung 7a festgelegten Soll-Drehzahl des jeweiligen Hydromotors 6 eine Führungsgröße F bestimmt, die sich als davon abgeleitete Regelgröße R auf den Schwenkwinkel des jeweiligen Hydromotors 6 auswirkt, wobei diese Regelgröße zu einer von außen vorgegebenen Steuergröße S addiert wird und auf den jeweiligen Hydromotor 6 dahin gehend wirkt, dass der Schwenkwinkel entsprechend geändert wird. Eine Addition der vorgegebenen Steuergröße S zu der ermittelten Regelgröße R wirkt sich ebenfalls auf die Hydropumpe 6 aus, so dass deren Betriebsparameter nicht nur über das Steuergerät vorgegeben wird, sondern ebenfalls von der dynamisch ermittelten Regelgröße R beeinflusst werden.

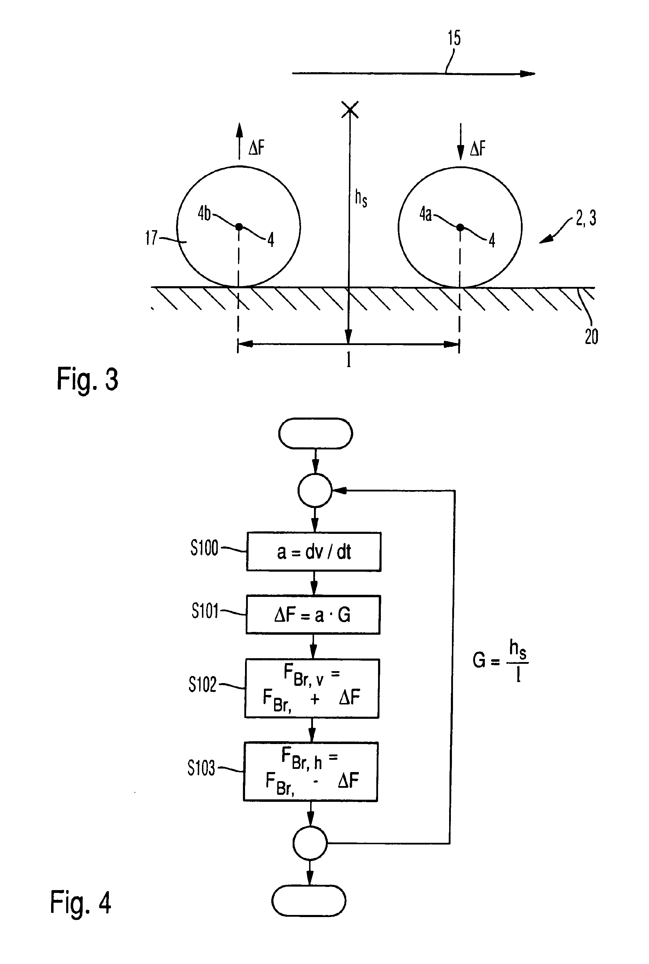

Fig. 3 zeigt eine schematische Darstellung der zusätzlich zur vorgegebenen Bremskraft wirkenden Verlagerung der Achslast ΔF. Bei einem Bremsvorgang wirkt zusätzlich zu einer vorgegebenen Bremskraft F_{Br} eine Verlagerung der Achslast ΔF. Diese bewirkt, dass auf die in Fahrtrichtung vordere Fahrzeugachse 4a eine höhere Normalkraft wirkt als auf die hintere Fahrzeugachse 4b, was erfindungsgemäß zur Folge hat, dass die vordere Fahrzeugachse 4a eine höhere resultierende Bremskraft erfährt. Die Verlagerung der Achslast ΔF berechnet sich aus der momentanen Verzögerung a durch Multiplikation mit einem Geometriefaktor G, wobei die momentane Verzögerung a durch Differenzieren einer momentanen Lineargeschwindigkeit v des Fahrzeugs relativ zur Unterlage 20 bestimmt wird. Der Geometriefaktor G des Fahrzeugs 2 ergibt sich durch Quotientenbildung einer Höhe des Fahrzeugschwerpunkts hₛ und dem Abstand 1 der Achsen 4a, 4b.

Fig. 4 zeigt eine schematische Darstellung des Algorithmus zur Berechnung einer verzögerungsabhängigen Bremskraftverteilung F_{Br, v} F_{Br,h}. Das erfindungsgemäße Verfahren zum kontrollierten Bremsen eines Fahrzeugs 2 mit hydrostatischen Fahrantrieb 3 bewirkt, dass blockierende Räder 17 mittels einer Regelung des Regelkreises 7 der Hydromotoren 6 verhindert werden, indem die Regelung für jede Achse 4a, 4b des Fahrantriebs kontinuierlich jeweils eine Führungsgröße F aus Sollwert-Istwert Differenz einer Drehzahl des angetriebenen Rads 17 bestimmt und die aus der Führungsgröße F bestimmte Regelgröße R jeweils in den Regelkreis 7 rückgekoppelt wird. Zum Bereitstellen einer verzögerungsabhängigen Bremskraftverteilung F_{Br,v}, F_{Br,h} auf die jeweilige Achse 4a, 4b bzw. auf das jeweilige Rad 17 durch die Regeleinrichtung 7a wird der in Fig. 3 skizzierte Effekt ausgenutzt. Dabei wird eine Verlagerung der Achslast ΔF des Fahrzeugs 2 aus der momentanen Verzögerung a des Fahrzeugs 2 dynamisch bestimmt und eine resultierende Bremskraft F_{Br,v}, F_{Br,h} auf die von dem Hydromotor 6 angetriebene Achse 4a, 4b ermittelt. Die resultierende Bremskraft F_{Br,v}, F_{Br,h} wird über den der jeweiligen Achse 4a, 4b zugeordneten Hydromotor 6 durch Einstellen des jeweiligen Schwenkwinkels umgesetzt.

Das in Fig. 4 dargestellte Flussdiagramm verdeutlicht die einzelnen Schritte bei der dynamischen Bestimmung der resultierenden Bremskraft F_{Br,v}, F_{Br,h}.

In Schritt S 100 wird durch Differenzieren der momentanen Lineargeschwindigkeit v des Fahrzeugs 2 relativ zur Unterlage 20 die momentane Verzögerung a des Bremsvorgangs bestimmt.

Aus der momentanen Verzögerung a des Bremsvorgangs wird in Schritt S 101 durch Multiplikation mit dem Geometriefaktor G des Fahrzeugs 2 die Verlagerung der Achslast ΔF des Fahrzeugs 2 berechnet.

In Schritt S 102 wird die resultierende Bremskraft F_{Br,v} auf die in Fahrtrichtung 15 vordere Achse 4a durch eine Addition einer vorgegebenen Bremskraft F_{Br} zu der Verlagerung der Achslast ΔF berechnet, wobei der Hydromotor 6 bzw. die Hydromotoren 6 der vorderen Achse 4a entsprechend in Richtung eines größeren Schluckvolumens S verstellt wird bzw. verstellt werden.

In Schritt S 103 wird die resultierende Bremskraft F_{Br,h} auf die hintere Achse 4b durch eine Subtraktion der Verlagerung der Achslast ΔF von der vorgegebenen Bremskraft F_{Br} berechnet, wobei der Hydromotor 6 bzw. die Hydromotoren 6 der hinteren Achse 4b entsprechend in Richtung eines kleineren Schluckvolumens verstellt wird bzw. verstellt werden.

Bei dem erfindungsgemäßen Verfahren wird eine aus der Regelung resultierende Verstellung des von der Hydropumpe 5 angetriebenen Hydromotors 6 durch eine Überlagerung der aktuell ermittelten Regelgröße R mit einer von außen mittels des Steuergeräts 16 vorgegebenen veränderlichen Steuergröße S bestimmt. Ferner werden die Schwenkwinkel der auf der in Fahrtrichtung vorderen Achse 4a angeordneten Hydromotoren 6 größer eingestellt als die Schwenkwinkel der hinten angeordneten Hydromotoren 6.

Ein weiteres Ausführungsbeispiel der vorliegenden Erfindung geht davon aus, dass auf ein angetriebenes Rad 17 des Fahrzeugs 2 an seiner in Fahrtrichtung vorne liegenden Achse 4a zusätzlich zu einer von außen vorgegebenen Bremskraft F_{Br} die dynamisch ermittelte Verlagerung der Achslast ΔF wirkt, so dass die dynamisch ermittelte Verlagerung der Achslast ΔF pro Rad wirkt, was den Effekt zur Verstärkung der Bremskraft zusätzlich erhöht. An einem Rad 17, das sich an der hinteren Achse 4b befindet, ergibt sich die resultierende Bremskraft F_{Br,h} durch Subtraktion der Verlagerung der Achslast ΔF von der vorgegebenen Bremskraft F_{Br}, wobei diese Subtraktion nun pro Rad 17 der hinteren Achse 4b ausgeführt wird.

Des weiteren bezieht sich das erfindungsgemäße Verfahren darauf, dass mit der Hydropumpe 5, mit dem Steuergerät 16 und mit der Regeleinrichtung 7a ein weiterer Regelkreis gebildet wird und ein Fördervolumen der Hydropumpe 5 dadurch geregelt wird, dass die Addition der von außen vorgegebenen Steuergröße S zu den ermittelten Führungsgrößen F aller Hydromotoren 6 eine Veränderung eines Fördervolumens der Hydropumpe 5 bewirkt, wobei das Fördervolumen der Hydropumpe 5 in dem Maß verringert wird, in dem sich ein Gesamtdurchfluss aller Hydromotoren 6 verringert.

Die Erfindung ist nicht auf Fahrzeuge mit hydrostatischen Fahrantrieben und mit zwei Fahrzeugachsen beschränkt sondern ist beispielsweise auch auf Fahrzeuge mit mehr als zwei Fahrzeugachsen anwendbar.

## Patentansprüche

1. Verfahren zum kontrollierten Bremsen eines Fahrzeugs (2) mit hydrostatischem Fahrantrieb (3), wobei der hydrostatische Fahrantrieb (3) zumindest zwei verschwenkbare, mit je einer Achse (4) des Fahrantriebs (3) verbundene, von einer Hydropumpe (5) angetriebene Hydromotoren (6) aufweist, die von jeweils einem Regelkreis (7) geregelt werden,
wobei blockierende Räder mittels einer Regelung des Regelkreises (7) der Hydromotoren (6) verhindert werden, indem die Regelung für jede Achse (4) des Fahrantriebs (3) kontinuierlich jeweils eine Führungsgröße (F) aus Sollwert-Istwert Differenz einer Drehzahl des angetriebenen Rads (17) bestimmt und diese Führungsgröße (F) jeweils in den Regelkreis (7) rückgekoppelt wird, und
wobei zum Bereitstellen einer verzögerungsabhängigen Bremskraftverteilung (F_{Br,v}, F_{Br,h}) auf die jeweilige Achse (4) durch ein Steuerprogramm eine Verlagerung der Achslast (ΔF) des Fahrzeugs (2) aus der momentanen Verzögerung (a) des Fahrzeugs dynamisch bestimmt wird und eine resultierende Bremskraft (F_{Br,v}, F_{Hr,h}) auf die von dem Hydromotor (6) angetriebene Achse (4) ermittelt wird und über den der jeweiligen Achse (4) zugeordneten Hydromotor (6) durch Einstellen eines entsprechenden Schwenkwinkels umgesetzt wird,
**dadurch gekennzeichnet,**
**dass** aus der momentanen Verzögerung (a) durch Multiplikation mit einem Geometriefaktor (G) die Verlagerung der Achslast (ΔF) des Fahrzeugs (2) berechnet wird, und dass der Geometriefaktor (G) für unterschiedliche Fahrzeugtypen angepasst wird.

2. Verfahren nach Anspruch 1,
**dadurch gekennzeichnet,**
**dass** die momentane Verzögerung (a) durch Differenzieren einer momentanen Lineargeschwindigkeit (v) des Fahrzeugs (2) relativ zu einer Unterlage (20) bestimmt wird.

3. Verfahren nach Anspruch 1 oder 2,
**dadurch gekennzeichnet,**
**dass** der Geometriefaktor (G) des Fahrzeugs (2) aus dem Verhältnis der Höhe eines Fahrzeugschwerpunkts (hₛ) zu dem Abstand (1) der Achsen (4a, 4b) berechnet wird.

4. Verfahren nach einem der Ansprüche 1 bis 3,
**dadurch gekennzeichnet,**
**dass** die Bremskraft (F_{Br,v}) auf die in Fahrtrichtung (15) vordere Achse (4a) sich durch eine Addition einer vorgegebenen Bremskraft (F_{Br}) zu der Verlagerung der Achslast (ΔF) ergibt, wobei der Hydromotor (6) bzw. die Hydromotoren (6) der vorderen Achse (4a) entsprechend in Richtung größeren Schluckvolumens verstellt wird bzw. verstellt werden.

5. Verfahren nach einem der Ansprüche 1 bis 4,
**dadurch gekennzeichnet,**
**dass** die Bremskraft (F_{BR,h}) auf die hintere Achse (4b) sich durch eine Subtraktion der Verlagerung der Achslast (ΔF) von der vorgegebenen Bremskraft (F_{Br}) ergibt, wobei der Hydromotor (6) oder die Hydromotoren (6) der hinteren Achse (4b) entsprechend in Richtung kleineren Schluckvolumens verstellt wird bzw. verstellt werden.

6. Verfahren nach einem der Ansprüche 1 bis 5,
**dadurch gekennzeichnet,**
**dass** eine aus der Regelung resultierende Verstellung jedes Hydromotors (6) durch eine Überlagerung der aktuell ermittelten Führungsgröße (F) mit einer von außen mittels eines Steuergeräts (16) vorgegebenen veränderlichen Steuergröße (S) bestimmt wird

7. Verfahren nach Anspruch 6,
**dadurch gekennzeichnet,**
**dass** die Schwenkwinkel der an der in Fahrtrichtung (15) vorderen Achse (4a) angeordneten Hydromotoren (6) größer eingestellt werden als die Schwenkwinkel der an der hinteren Achse (4b) angeordneten Hydromotoren (6).

8. Verfahren nach Anspruch 6 oder 7,
**dadurch gekennzeichnet,**
**dass** auf ein angetriebenes Rad (17) des Fahrzeugs (2) an seiner in Fahrtrichtung (15) vorne liegenden Achse (4a) zusätzlich zu einer von außen vorgegebenen Bremskraft (F_{Br}) die dynamisch ermittelte Verlagerung der Achslast (ΔF) wirkt.

9. Verfahren nach einem der Ansprüche 6 bis 8,
**dadurch gekennzeichnet,**
**dass** auf ein angetriebenes Rad (17) des Fahrzeugs (2) an seiner hinteren Achse (4b) die dynamisch ermittelte Verlagerung der Achslast (ΔF) von der von außen vorgegebenen Bremskraft (F_{Br}) pro Rad subtrahiert wird.

10. Verfahren nach einem der Ansprüche 6 bis 9,
**dadurch gekennzeichnet,**
**dass** mit der Hydropumpe (5), mit dem Steuergerät (16) und mit dem Regler ein weiterer Regelkreis (7b) gebildet wird und ein Fördervolumen der Hydropumpe (5) dadurch geregelt wird, dass die Addition der von außen vorgegebenen Steuergröße (S) zu den ermittelten Führungsgrößen (F) aller Hydromotoren (6) eine Veränderung eines Fördervolumens der Hydropumpe (5) bewirkt.

11. Verfahren nach einem der Ansprüche 1 bis 10,
**dadurch gekennzeichnet,**
**dass** das Fördervolumen der Hydropumpe (5) indem Maß verringert wird, in dem sich ein Gesamtdurchfluss aller Hydromotoren (6) verringert.

12. Vorrichtung (1) zum kontrollierten Bremsen eines Fahrzeugs (2) mit hydrostatischem Fahrantrieb (3), wobei der hydrostatische Fahrantrieb (3) zumindest zwei verschwenkbare, mit je einer Achse (4) des Fahrantriebs (3) verbundene, von einer Hydropumpe (5) angetriebene Hydromotoren (6) mit einer Regeleinrichtung (7a) zur kontinuierlichen Rückkopplung eine Führungsgröße (F) aus Sollwert-Istwert Differenz einer Drehzahl des angetriebenen Rads (17) in die Regeleinrichtung (7a) aufweist,
wobei mittels der Regeleinrichtung (7a) ein Antiblockiersystem zum Bereitstellen einer Bremskraftverteilung (F_{Br,v}, F_{Br,h}) auf die Achsen (4a, 4b) des Fahrantriebs (3) vorgesehen ist,
wobei die Regeleinrichtung (7a) eine dynamische Bestimmung der Verlagerung der Achslast (ΔF) des Fahrzeugs (2) aus der momentanen Verzögerung (a) des Fahrzeugs (2) vornimmt, und wobei die Regeleinrichtung (7a) eine resultierende Bremskraft (F_{Br,v}, F_{Br,h}) auf die von dem Hydromotor (6) angetriebene Achse (4) ermittelt und über den der jeweiligen Achse (4a, 4b) zugeordneten Hydromotor (6) durch Einstellen eines entsprechenden Schwenkwinkels umsetzt,
**dadurch gekennzeichnet,**
**dass** aus der momentanen Verzögerung (a) durch Multiplikation mit dem Geometriefaktor (G) die Verlagerung der Achslast (ΔF) des Fahrzeugs (2) berechnet wird, und dass der Geometriefaktor (G) für unterschiedliche Fahrzeugtypen angepasst wird.

13. Vorrichtung nach Anspruch 12,
**dadurch gekennzeichnet,**
**dass** der hydrostatische Fahrantrieb (3) einen geschlossenen Hydraulikkreislauf (18) aufweist.

14. Vorrichtung nach Anspruch 12 oder 13,
**dadurch gekennzeichnet,**
**dass** die Hydromotoren (6) auf Null schwenkbar sind.

15. Vorrichtung nach einem der Ansprüche 12 bis 14,
**dadurch gekennzeichnet,**
**dass** die Hydromotoren (6) und die Hydropumpe (5) jeweils ein elektroproportional angesteuertes Stellglied (19) aufweisen.

## Claims

1. A method for controlled braking of a vehicle (2) having a hydrostatic drive mechanism (3), the hydrostatic drive mechanism (3) having at least two pivotal hydraulic motors (6) which are connected to a respective axle (4) of the drive mechanism (3) and are driven by a hydraulic pump (5) and regulated by a respective regulating circuit (7), with regulation of the regulating circuit (7) of the hydraulic motors (6) preventing wheels from locking, in that the regulation continuously determines, for each axle (4) of the drive mechanism (3), a respective reference variable (F) comprising the difference between a set value and the actual value of a speed of the driven wheel (17), and feeds this reference variable (F) back to the respective regulating circuit (7), and, in order to provide deceleration-dependent distribution of the braking force (F_{Br,v}, F_{Br,h}) to the respective axle (4) by a control program, a displacement of the axle load (ΔF) of the vehicle (2) being dynamically determined from the current deceleration (a) of the vehicle, and a resultant braking force (F_{Br,v}, F_{Br,h}) acting on the axle (4) driven by the hydraulic motor (6) being determined and put into effect by way of the hydraulic motor (6) associated with the respective axle (4) by adjusting a corresponding pivot angle,
**characterised in that** the current deceleration (a) is multiplied by a geometric factor (G) to calculate the displacement of the axle load (ΔF) of the vehicle (2),
and **in that** the geometric factor (G) is adapted for difference vehicle types.

2. A method according to Claim 1, **characterised in that** the current deceleration (a) is determined by determining the difference between a current linear velocity (v) of the vehicle (2) and the ground (20) underneath.

3. A method according to Claim 1 or 2, **characterised in that** the geometric factor (G) of the vehicle (2) is calculated from the relationship between the height of the vehicle centre of gravity (hₛ) and the spacing (1) between the axles (4a, 4b).

4. A method according to one of Claims 1 to 3, **characterised in that** the braking force (F_{Br,v}) to the axle (4a) which is at the front, as seen in the direction of travel (15), is produced by adding a predetermined braking force (F_{Br}) to the displacement of the axle load (ΔF), with the hydraulic motor or motors (6) of the front axle (4a) being adjusted accordingly to give a larger intake volume.

5. A method according to one of Claims 1 to 4, **characterised in that** the braking force (F_{BR,h}) to the rear axle (4b) is produced by subtracting the displacement of the axle load (ΔF) from the predetermined braking force (F_{Br}), with the hydraulic motor or motors (6) of the rear axle (4b) being adjusted accordingly to give a smaller intake volume.

6. A method according to one of Claims 1 to 5, **characterised in that** an adjustment to each hydraulic motor (6), resulting from the regulation, is determined by overlaying the currently determined reference variable (F) with a changeable control variable (S) which is externally predetermined by means of a control unit (16).

7. A method according to Claim 6, **characterised in that** the pivot angles of the hydraulic motors (6) arranged on the axle (4a) which is at the front, as seen in the direction of travel (15), are adjusted to be larger than the pivot angles of the hydraulic motors (6) arranged on the rear axle (4b).

8. A method according to Claim 6 or 7, **characterised in that** the dynamically determined displacement of the axle load (ΔF) acts on a driven wheel (17) of the vehicle (2) at its axle (4a) which is at the front, as seen in the direction of travel (15), in addition to an externally predetermined braking force (F_{Br}).

9. A method according to one of Claims 6 to 8, **characterised in that** the dynamically determined displacement of the axle load (ΔF) is subtracted from the externally predetermined braking force (F_{Br}) for each wheel at a driven wheel (17) of the vehicle (2) at its rear axle (4b).

10. A method according to one of Claims 6 to 9, **characterised in that** a further regulating circuit (7b) is formed by the hydraulic pump (5), the control unit (16) and the regulator, and a conveying volume of the hydraulic pump (5) is regulated **in that** the addition of the externally predetermined control variable (S) to the determined reference variables (F) of all the hydraulic motors (6) brings about a change in the conveying volume of the hydraulic pump (5).

11. A method according to one of Claims 1 to 10, **characterised in that** the conveying volume of the hydraulic pump (5) is reduced **in that** total throughput of all the hydraulic motors (6) is reduced.

12. A device (1) for controlled braking of a vehicle (2) having a hydrostatic drive mechanism (3), the hydrostatic drive mechanism (3) having at least two pivotal hydraulic motors (6) which are connected to a respective axle (4) of the drive mechanism (3) and are driven by a hydraulic pump (5) and have a regulating device (7a), for continuously feeding back to the regulating device (7a) a reference variable (F) comprising the difference between a set value and the actual value of a speed of the driven wheel (17), an anti-lock system for providing a distribution of the braking force (F_{Br,v}, F_{Br,h}) to the axles (4a, 4b) of the drive mechanism (3) being provided by means of the regulating device (7a), with the regulating device (7a) dynamically determining the displacement of the axle load (ΔF) of the vehicle (2) from the current deceleration (a) of the vehicle (2), and the regulating device (7a) determining a resultant braking force (F_{Br,v}, F_{Br,h}) acting on the axle (4) driven by the hydraulic motor (6) and putting it into effect by way of the hydraulic motor (6) associated with the respective axle (4a, 4b) by adjusting a corresponding pivot angle,
**characterised in that** the current deceleration (a) is multiplied by a geometric factor (G) to calculate the displacement of the axle load (ΔF) of the vehicle (2),
and **in that** the geometric factor (G) is adapted for different vehicle types.

13. A device according to Claim 12, **characterised in that** the hydrostatic drive mechanism (3) has a closed hydraulic circuit (18).

14. A device according to Claim 12 or 13, **characterised in that** the hydraulic motors (6) are pivotal to zero.

15. A device according to one of Claims 12 to 14, **characterised in that** the hydraulic motors (6) and the hydraulic pump (5) each have an actuator (19) activated in a manner which is proportional to the current.

## Revendications

1. Procédé pour assurer le freinage contrôlé d'un véhicule (2) à entraînement de marche hydrostatique (3), l'entraînement de marche hydrostatique (3) comprenant au moins deux moteurs hydrauliques (6) à réglage par pivotement, entraînés par une pompe hydraulique (5) et reliés chacun à un essieu (4) de l'entraînement de marche (3), et régulés respectivement par un circuit de régulation (7), procédé
d'après lequel on empêche le blocage de roues au moyen d'une régulation par le circuit de régulation (7) des moteurs hydrauliques (6), grâce au fait que l'on détermine de manière continuelle à l'aide de la régulation, respectivement pour chaque essieu (4) de l'entraînement de marche (3), une grandeur de référence pilote (F) constituée de la différence valeur de consigne-valeur réelle d'une vitesse de rotation de la roue (17) entraînée, et cette grandeur de référence pilote (F) est respectivement renvoyée en réaction dans le circuit de régulation (7),
et d'après lequel pour fournir une répartition de force de freinage (F_{Br,v}, F_{Br,h}) fonction de la décélération sur l'essieu respectif (4), on détermine de manière dynamique, grâce à un programme de commande, un déport de la charge d'essieu (ΔF) du véhicule (2) à partir de la décélération instantanée (a) du véhicule, et on détermine une force de freinage résultante (F_{Br,v}, F_{Br,h}) sur l'essieu (4) entraîné par le moteur hydraulique (6), qui est convertie par l'intermédiaire du moteur hydraulique (6) associé à l'essieu (4) respectif, par réglage d'un angle de pivotement adéquat correspondant,
**caractérisé**
**en ce que** l'on calcule le déport de la charge d'essieu (ΔF) du véhicule (2) à partir de la décélération instantanée (a) par multiplication par un facteur géométrique (G), et en ce que le facteur géométrique (G) est adapté à différents types de véhicules.

2. Procédé selon la revendication 1,
**caractérisé**
**en ce que** la décélération instantanée (a) est déterminée par différentiation d'une vitesse linéaire (v) instantanée du véhicule (2) par rapport à une base de support (20).

3. Procédé selon la revendication 1 ou la revendication 2,
**caractérisé**
**en ce que** le facteur géométrique (G) du véhicule (2) est calculé à partir du rapport de la hauteur d'un centre de gravité (hₛ) du véhicule à une distance (1) entre les essieux (4a, 4b).

4. Procédé selon l'une des revendications 1 à 3,
**caractérisé**
**en ce que** la force de freinage (F_{Br,v}) sur l'essieu avant (4a) en se référant au sens de marche (15), est obtenue par une addition d'une force de freinage (F_{Br}) prescrite au déport de la charge d'essieu (ΔF), le moteur hydraulique (6) ou respectivement les moteurs hydrauliques (6) de l'essieu avant (4a) étant réglé ou respectivement réglés de manière correspondante dans le sens d'une cylindrée plus grande.

5. Procédé selon l'une des revendications 1 à 4,
**caractérisé**
**en ce que** la force de freinage (F_{Br,h}) sur l'essieu arrière (4b) est obtenue par une soustraction du déport de la charge d'essieu (ΔF) de la force de freinage (F_{Br}) prescrite, le moteur hydraulique (6) ou respectivement les moteurs hydrauliques (6) de l'essieu arrière (4b) étant réglé ou respectivement réglés de manière correspondante dans le sens d'une cylindrée plus petite.

6. Procédé selon l'une des revendications 1 à 5,
**caractérisé**
**en ce qu'**un réglage de chaque moteur hydraulique (6) résultant de la régulation, est déterminé par une superposition de la grandeur de référence pilote (F) définie actuellement, avec une grandeur de commande (S) variable prescrite de l'extérieur à l'aide d'un appareil de commande (16).

7. Procédé selon la revendication 6,
**caractérisé**
**en ce que** les angles de pivotement des moteurs hydrauliques (6) agencés sur l'essieu (4a) avant en se référant au sens de marche (15), sont réglés plus grands que les angles de pivotement des moteurs hydrauliques (6) agencés sur l'essieu arrière (4b).

8. Procédé selon la revendication 6 ou la revendication 7,
**caractérisé**
**en ce que** sur une roue (17) entraînée ou motrice du véhicule (2), sur l'essieu (4a) de celui-ci situé à l'avant en se référant au sens de marche (15), agit, en plus d'une force de freinage (F_{Br}) prescrite de l'extérieur, le déport de la charge d'essieu (ΔF) déterminé de manière dynamique.

9. Procédé selon l'une des revendications 6 à 8,
**caractérisé**
**en ce que** sur une roue (17) entraînée ou motrice du véhicule (2), sur l'essieu arrière (4b) de celui-ci, le déport de la charge d'essieu (ΔF) déterminé de manière dynamique est soustrait de la force de freinage (F_{Br}) prescrite de l'extérieur, par roue.

10. Procédé selon l'une des revendications 6 à 9,
**caractérisé**
**en ce qu'**un autre circuit de régulation (7b) est formé à l'aide de la pompe hydraulique (5), de l'appareil de commande (16) et du régulateur, et un débit-volume de la pompe hydraulique (5) est régulé par le fait que l'addition de la grandeur de commande (S) prescrite de l'extérieur aux grandeurs de référence pilotes (F) de tous les moteurs hydrauliques (6), produit une variation du débit-volume de la pompe hydraulique (5).

11. Procédé selon l'une des revendications 1 à 10,
**caractérisé**
**en ce que** le débit-volume de la pompe hydraulique (5) est réduit d'une même valeur que se réduit un débit global de tous les moteurs hydrauliques (6).

12. Dispositif (1) pour assurer le freinage contrôlé d'un véhicule (2) à entraînement de marche hydrostatique (3), l'entraînement de marche hydrostatique (3) comprenant au moins deux moteurs hydrauliques (6) à réglage par pivotement, entraînés par une pompe hydraulique (5) et reliés chacun à un essieu (4) de l'entraînement de marche (3), et comprenant un dispositif de régulation (7a) pour renvoyer continuellement en réaction dans le dispositif de régulation (7a), une grandeur de référence pilote (F) issue de la différence valeur de consigne-valeur réelle instantanée d'une vitesse de rotation de la roue (17) entraînée ou motrice, dispositif
dans lequel au moyen du dispositif de réglage (7a) il est prévu un système antiblocage pour la fourniture d'une répartition de force de freinage (F_{Br,v}, F_{Br,h}) sur les essieux (4a, 4b) de l'entrainement de marche (3), dans lequel le dispositif de régulation (7a) effectue une détermination dynamique du déport de la charge d'essieu (ΔF) du véhicule (2) à partir de la décélération instantanée (a) du véhicule (2),
et dans lequel le dispositif de régulation (7a) détermine une force de freinage (F_{Br,v}, F_{Br,h}) résultante sur l'essieu (4) entraîné par le moteur hydraulique (6), et la convertit par l'intermédiaire du moteur hydraulique (6) associé à l'essieu (4a, 4b) respectif, par réglage d'un angle de pivotement adéquat correspondant,
**caractérisé**
**en ce que** le déport de la charge d'essieu (ΔF) du véhicule (2) est calculé à partir de la décélération instantanée (a) par multiplication par le facteur géométrique (G), et en ce que le facteur géométrique (G) est adapté à différents types de véhicules.

13. Dispositif selon la revendication 12,
**caractérisé**
**en ce que** l'entraînement de marche hydrostatique (3) comporte un circuit hydraulique fermé (18).

14. Dispositif selon la revendication 12 ou la revendication 13,
**caractérisé**
**en ce que** les moteurs hydrauliques (6) peuvent être pivotés sur une valeur nulle.

15. Dispositif selon l'une des revendications 12 à 14,
**caractérisé**
**en ce que** les moteurs hydrauliques (6) et la pompe hydraulique (5) comportent chacun respectivement un organe de réglage (19) à commande électro-proportionnelle.
